# EUROPÄISCHE PATENTANMELDUNG

(11) **EP 1 084 653 A1**
(43) Veröffentlichungstag der Anmeldung: **21.03.2001**
(21) Anmeldenummer: 00118487.8
(22) Anmeldetag: 25.08.2000
(51) Int. Cl.: A47B 57/10, F16B 12/42

(54) **Profilrohr und Verfahren zum seitlichen Verbinden des Profilrohres mit einem anderen Bauteil**

(30) Priorität: 14.09.1999 AT 62499 U
(71) Anmelder: Siro Beschläge- und Metallwarenfabrik Gesellschaft m.b.H., 4452 Ternberg (AT)
(72) Erfinder: Sikora, Gerhard, 4499 Steyr (AT); Sikora, Günter, 4400 Steyr (AT)
(74) Vertreter: Torggler, Paul, Dr.

(57) **Zusammenfassung**

Profilrohr, vorzugsweise aus Kunststoff, mit Innenstegen, wobei die Innenstege (3, 4) Aufnahmerasten (5) für das Kopfstück (10) eines Verbindungselementes (11) zur Verbindung des Profilrohres (1) mit einem anderen Bauteil (8) bilden. An der Stelle, an der der Bauteil (8) mit dem Profilrohr (1) verbunden werden soll, wird das Profilrohr (1) seitlich geöffnet, worauf das vorzugsweise kugelförmige Kopfstück (10) eines am Bauteil (8) befestigten Verbindungselementes (11) in eine freigelegte Aufnahmerast (5) der Innenstege (3, 4) des Profilrohres (1) einklipst.

## Beschreibung

Die Erfindung bezieht sich auf ein Profilrohr, vorzugsweise aus Kunststoff, mit Innenstegen.

Profilrohre, auch aus Kunststoff, mit Innenstegen sind bekannt. Solche Profilrohre werden in den verschiedensten Anwendungen eingesetzt, unter anderem auch als Steher im Möbel- oder Regalbau. Die Innenstege dienen hauptsächlich zur Versteifung der Profilrohre.

Der Erfindung liegt jedoch die Aufgabe zugrunde, die Innenstege auch zur Befestigung der Profilrohre mit anderen Bauteilen zu nützen.

Dies wird erfindungsgemäß dadurch erreicht, daß die Innenstege Aufnahmerasten für das Kopfstück eines Verbindungselementes bilden.

Die Verbindung des Profilrohres mit einem anderen Bauteil, z.B. einem plattenförmigen Bauteil, kann nach einer erfindungsgemäßen Verfahrensweise dadurch erfolgen, daß an der Stelle, an der der Bauteil mit dem Profilrohr verbunden werden soll, das Profilrohr seitlich geöffnet wird, worauf das Kopfstück eines am Bauteil befestigten Verbindungselementes in eine freigelegte Aufnahmerast der Innenstege des Profilrohres einklipst. Dabei kann die zur seitlichen Öffnung des Profilrohres geschaffene Ausnehmung auch zur Aufnahme der Randbereiche des mit dem Profilrohr zu verbindenden (z.B. plattenförmigen) Bauteiles dienen, wodurch die Verbindung zwischen Profilrohr und Bauteil nicht allein auf dem Kopfstück des Verbindungselementes lastet, sondern - in Belastungsrichtung längs der Achse des Profilrohres gesehen - auch nach Art einer formschlüssigen Verbindung zwischen Profilrohr und Bauteil erfolgt.

Die Erfindung wird nachstehend anhand der Zeichnungen durch ein Ausführungsbeispiel näher erläutert.
Fig. 1 zeigt den Querschnitt eines erfindungsgemäßen Profilrohres;
Fig. 2 und 3 zeigen (in 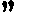 Explosionsdarstellung") unter verschiedenem Blickwinkel das Profilrohr, das Verbindungselement und den zu befestigenden plattenförmigen Bauteil;
Fig. 4 zeigt den mit dem Profilrohr verbundenen plattenförmigen Bauteil im Schnitt;
Fig. 5 zeigt die stirnseitige Verbindung des Profilrohres mit einer Bodenplatte;
Fig. 6 zeigt in Vorderansicht und
Fig. 7 in Seitenansicht ein Regal mit Stehern als erfindungsgemäßen Profilrohren und damit verbundenen Fachbrettern.
Das in den Zeichnungen dargestellte Profilrohr 1 aus Kunststoff weist einen Mantel 2 mit ellipsenförmigem Grundriß auf. Im Inneren des Profilrohres 1 sind zwei Innenstege 3,4 ausgebildet, die gegenüberliegende Mantelbereiche verbinden, also das Innere des Profilrohres durchsetzen. Der Zwischenraum zwischen den beiden Innenstegen 3,4 ist derart strukturiert, daß benachbart dem Mantel 2 rinnenförmige Freiräume 5 mit konkaven Seitenwänden und ein mittlerer erweiterter Freiraum 6 gebildet werden.

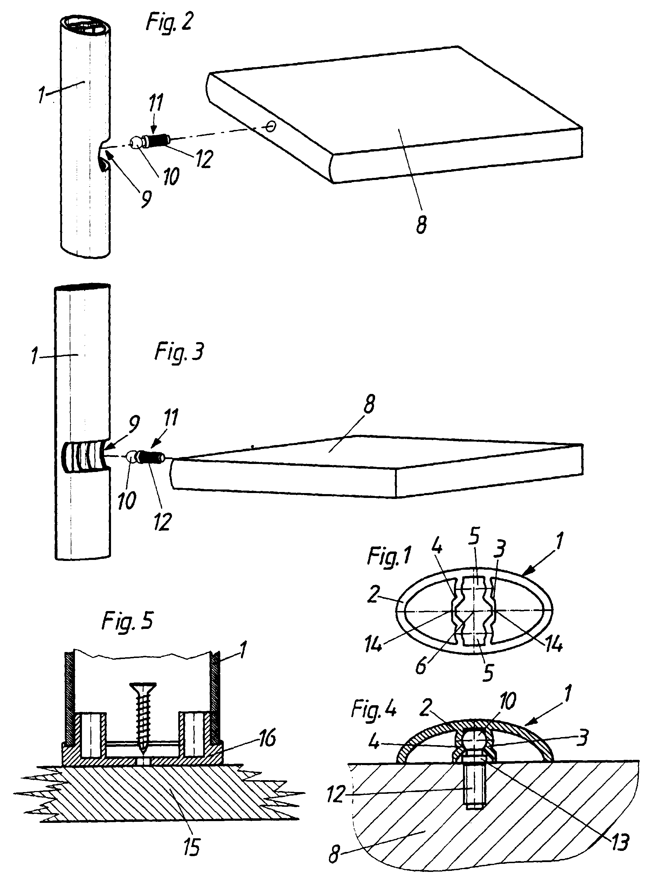

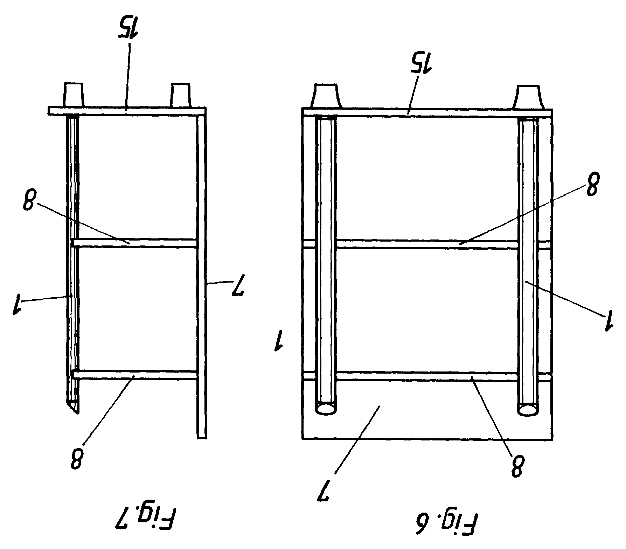

Profilrohre 1 gemäß Fig. 1 können z.B., wie aus Fig. 6 und 7 ersichtlich, als Steher eines Regals verwendet werden. Die hier an einer Rückwand 7 befestigten Fachbretter 8 werden in der in Fig. 2 bis 4 dargestellten Weise mit den Profilrohren 1 verbunden. Dazu werden die Profilrohre 1 an den mit den Fachbrettern 8 zu verbindenden Stellen seitlich geöffnet, so daß sich quer zur Profilachse eine Aufnahmenut 9 für den Stirnkantenbereich der Fachbretter 8 bildet. Im Bereich der Aufnahmenut 9 weist das Profilrohr nur noch den halben Querschnitt auf (Fig. 4). Das Fachbrett 8 wird in der Aufnahmenut 9 formschlußartig gehalten, jedenfalls was Belastungen parallel zur Achse des Profilrohres betrifft.

Bei der Bildung der Aufnahmenuten 9 werden im Bereich dieser Aufnahmenuten die Innenstege 3,4 zur Hälfte entfernt, so daß in den Aufnahmenuten 9 der rinnenförmige Freiraum 5 zwischen den stehenbleibenden Hälften der Innenstege 3,4 zugänglich ist und als Aufnahmerast für den Kopf 10 eines Verbindungselementes 11 dient, dessen Gewindeschaft 12 mit dem Fachbrett 8 an dessen Stirnkante verschraubt ist. Ein Bund 13, dessen Durchmesser größer ist als der Gewindeschaft 12, dient als Anschlag des Verbindungselementes an der Stirnkante des Fachbrettes 8.

Zur leichteren Trennung der Innenstege 3,4 in der Profilmitte weisen die Innenstege 3,4 dort eine Trennstelle 14, beim Ausführungsbeispiel in Form einer Zone verringerter Stegwandstärke, auf. Außerdem ist dort - wie schon erwähnt - der Abstand zwischen den Innenstegen 3,4 vergrößert, und zwar zur Bildung eines erweiterten Freiraumes 6 für den Bund 13 des Verbindungselementes 11.

Zur Verbindung des Profilrohres 1 mit einer Bodenplatte 15 (Fig. 5,6,7) wird auf die Bodenplatte 15 ein Sockel 16 aufgeschraubt und auf diesen das Profilrohr 1 aufgesteckt.

Beim dargestellten Ausführungsbeispiel ist der Mantel des Profilrohres 1 von elliptischem Querschnitt. Wenn z.B. das Möbeldesign 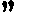 runde" Profilrohre erfordert, weist der elliptische Querschnitt auch einen technischen Vorteil gegenüber einem kreisrunden Querschnitt mit einem der Nebenachse der Ellipse entsprechenden Durchmesser auf, weil beim elliptischen Querschnitt, wenn die Aufnahmenut 9 am flachen Nebenscheitel der Ellipse gebildet wird, eine breitere Stützfläche für das Fachbrett 8 entsteht als bei einem in die Ellipse eingeschriebenen Kreis. Dementsprechend erstrecken sich beim dargestellten Ausführungsbeispiel die Innenstege 3,4 vom Bereich des weniger stark gekrümmten Nebenscheitels der Ellipse des Profilrohr-Mantels 2 in Richtung zum gegenüberliegenden Nebenscheitel.

Wenn es das Design erfordert bzw. gestattet, können freilich statt elliptischer Profilrohre auch solche mit anderen Querschnitten, z.B. kreisrunden, quadratischen oder rechteckigen verwendet werden.

Profilrohre aus Kunststoff, vorzugsweise aus extrudierbarem thermoplastischem Kunststoff, haben u.a. auch den Vorteil, daß sie problemlos die erforderliche federnde Wirkung der durch die Innenstege 3,4 gebildeten Seitenwände der Aufnahmerasten 5 für das Kopfstück 10 des Verbindungselementes 11 garantieren. Es lassen sich aber auch bei Profilrohren aus Metall bei entsprechender Dimensionierung und Gestaltung der Innenstege Rasteffekte für den Kopf des Verbindungselementes erzielen.

Beim dargestellten Ausführungsbeispiel verbinden die Innenstege 3,4 gegenüberliegende Mantelbereiche des Profilrohres, was für die Versteifungsfunktion der Innenstege von Vorteil ist. Es können jedoch - bei etwas geringerem Versteifungseffekt - die Innenstege 3,4 auch in der Mitte unterbrochen sein, also nur als 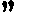 Rippen" vom Mantel 2 in das Rohrinnere ragen. In diesem Fall erübrigt sich ein Durchtrennen der Innenstege 3,4 bei der Bildung der Aufnahmenuten 9 für die Fachbretter 8 bzw. anderer an die Profilrohre anzuschließenden Bauteile.

## Patentansprüche

1. Profilrohr, vorzugsweise aus Kunststoff, mit Innenstegen, dadurch gekennzeichnet, daß die Innenstege (3,4) Aufnahmerasten (5) für das Kopfstück (10) eines Verbindungselementes (11) bilden.

2. Profilrohr nach Anspruch 1, dadurch gekennzeichnet, daß je zwei Innenstege (3,4) zwischen sich eine Aufnahmerast (5) bilden.

3. Profilrohr nach Anspruch 1 oder 2, dadurch gekennzeichnet, daß je zwei Innenstege (3,4) zwischen sich, vorzugsweise nahe dem Mantel (2) des Profilrohres (1), einen rinnenförmigen Freiraum (5) mit konkaven Seitenwänden bilden.

4. Profilrohr nach einem der Ansprüche 1 bis 3, dadurch gekennzeichnet, daß die Innenstege (3,4) gegenüberliegende Mantelbereiche des Profilrohres (1) verbinden.

5. Profilrohr nach Anspruch 4, dadurch gekennzeichnet, daß die Innenstege (3,4) etwa im Bereich der Profilmitte eine Trennstelle, z.B. von verringerter Stegwandstärke, aufweisen.

6. Profilrohr nach einem der Ansprüche 1 bis 5, dadurch gekennzeichnet, daß die zwei Innenstege (3,4), die zwischen sich eine Aufnahmerast (5) bilden, etwa in der Profilmitte eine vergrößerte Distanz aufweisen und dort einen erweiterten Freiraum (6) bilden.

7. Profilrohr nach einem der Ansprüche 1 bis 6, dadurch gekennzeichnet, daß der Mantel (2) des Profilrohres (1) einen elliptischen Querschnitt aufweist.

8. Profilrohr nach Anspruch 7, dadurch gekennzeichnet, daß die Innenstege (3,4) sich vom Bereich eines weniger stark gekrümmten Nebenscheitels der Ellipse in Richtung zum gegenüberliegenden Nebenscheitel erstrecken.

9. Verfahren zur seitlichen Verbindung eines Profilrohres nach einem der Ansprüche 1 bis 8 mit einem anderen Bauteil, dadurch gekennzeichnet, daß an der Stelle, an der der Bauteil (8) mit dem Profilrohr (1) verbunden werden soll, das Profilrohr (1) seitlich geöffnet wird, worauf das vorzugsweise kugelförmige Kopfstück (10) eines am Bauteil (8) befestigten Verbindungselementes (11) in eine freigelegte Aufnahmerast (5) der Innenstege (3,4) des Profilrohres (1) einklipst.

10. Verfahren nach Anspruch 9, dadurch gekennzeichnet, daß am Profilrohr (1) quer zur Profilachse eine Aufnahmenut (9), vorzugsweise zur Aufnahme eines plattenförmigen Bauteils (8) gebildet wird.

11. Verfahren nach Anspruch 9 oder 10, dadurch gekennzeichnet, daß beim seitlichen Öffnen des Profilrohres bzw. zur Bildung der Aufnahmenuten (9) an dieser Stelle etwa die Hälfte der das Rohrinnere durchsetzenden Innenstege (3,4) entfernt werden.

12. Vorrichtung zur seitlichen Verbindung eines Profilrohres nach einem der Ansprüche 1 bis 8 mit einem anderen Bauteil, dadurch gekennzeichnet, daß im Inneren des Profilrohres (1), vorzugsweise zwischen zwei Innenstegen (3, 4), Aufnahmerasten (5) für das Kopfstück (10) eines Verbindungselementes (11) ausgebildet sind und das Verbindungselement (11), vorzugsweise mittels eines Gewindeschaftes (12), mit dem anderen Bauteil (8) verbindbar ist.

13. Vorrichtung nach Anspruch 12, dadurch gekennzeichnet, daß das Profilrohr (1) zur Verbindung mit dem anderen Bauteil (8) seitliche, vorzugsweise als Aufnahmenuten (9) für einen plattenförmigen Bauteil (8) ausgebildete Ausnehmungen für den Zugang der Kopfstücke (10) der Verbindungselemente (11) zu den Aufnahmerasten (5) im Profilrohr (1) aufweisen.

14. Vorrichtung nach Anspruch 12 oder 13, dadurch gekennzeichnet, daß das Verbindungselement (11) zwischen dem vorzugsweise kugelförmigen Kopfstück (10) und dem Gewindeschaft (12) einen Bund (13) aufweist, dessen Durchmesser größer ist als der Gewindeschaft (12).
